# EUROPEAN PATENT APPLICATION

(11) **EP 3 518 193 A1**
(43) Date of publication of application: **31.07.2019**
(21) Application number: 19153536.8
(22) Date of filing: 24.01.2019
(51) Int. Cl.: G07F 17/00, G06Q 10/06, G06Q 30/06, A61G 5/04

(54) **SYSTEMS AND METHODS FOR ELECTRONICALLY SCHEDULING WHEELCHAIR COMPONENTS**

(30) Priority: 24.01.2018 US 201815879011
(71) Applicant: Toyota Motor Engineering & Manufacturing North America, Inc., Plano, TX 75024 (US)
(72) Inventor: Moore, Douglas A., Fairview, TX 75069 (US)
(74) Representative: Kuhnen & Wacker Patent- und Rechtsanwaltsbüro PartG mbB

(57) **Abstract**

Systems and methods for electronically scheduling wheelchair components are provided. One embodiment of a method includes identifying a personal wheelchair component and determining a location for an event of a passenger of the personal wheelchair component. Some embodiments are configured for scheduling a rental wheelchair component for compatibly pairing with the personal wheelchair component for at least one section of the event. Similarly, in some embodiments when the rental wheelchair component paired with the personal wheelchair component, a wheelchair setting is communicated for implementation.

## Description

### TECHNICAL FIELD

Embodiments described herein generally relate to systems and methods for electrically scheduling wheelchair components and, more specifically, to embodiments that facilitate the renting and scheduling of a powered base component for a traveling wheelchair passenger.

### BACKGROUND

There are a variety of powered wheelchair providers and while they each vary in their capabilities, most powered wheelchairs can be customized to the specific user in both fit and function. As an example, some powered wheelchairs are modular and include a chair component and a power base component. This means that different chair components can be paired with different powered base components. The chair component can be customized for specific users.

Travelling with such a powered wheelchair can be burdensome because, due to its size, powered wheelchairs require a large cargo space. Travelling using public transportation (such as airplanes, subways, trains, and boats/ferries) poses even additional burdens and restrictions. Oftentimes, especially in air travel, the wheelchair will need to be moved and handled by persons not skilled in properly operating the chair. This frequently leads to damage and potential disabling of the power chair. Thus a need exists in the industry.

### SUMMARY

Systems and methods for electronically scheduling wheelchair components are provided. One embodiment of a method includes identifying a personal wheelchair component and determining a location for an event of a passenger of the personal wheelchair component. Some embodiments are configured for scheduling a rental wheelchair component for compatibly pairing with the personal wheelchair component for at least one section of the event. Similarly, in some embodiments when the rental wheelchair component paired with the personal wheelchair component, a wheelchair setting is communicated for implementation.

In another embodiment, a system for electronically scheduling wheelchair components includes a rental wheelchair component for compatibly pairing with a personal wheelchair component, the rental wheelchair component including a wheelchair computing device. The system may also include a remote computing device that includes logic that, when executed by the remote computing device, causes the system to identify the personal wheelchair component, determine a location of an event for a passenger of the personal wheelchair component, and schedule the rental wheelchair component for compatibly pairing with the personal wheelchair component for at least one section of the event. In some embodiment, when the rental wheelchair component is coupled to the personal wheelchair component, the wheelchair computing device causes the rental wheelchair component to communicate event related data to the passenger.

In yet another embodiment, a system includes a remote computing device that includes logic that, when executed by the remote computing device, causes the system to identify the personal wheelchair component, determine a location for an event for a passenger of the personal wheelchair component and schedule the rental wheelchair component for compatibly pairing with the personal wheelchair component for at least one section of the event.

These and additional features provided by the embodiments of the present disclosure will be more fully understood in view of the following detailed description, in conjunction with the drawings.

### BRIEF DESCRIPTION OF THE DRAWINGS

The embodiments set forth in the drawings are illustrative and exemplary in nature and not intended to limit the disclosure. The following detailed description of the illustrative embodiments can be understood when read in conjunction with the following drawings, where like structure is indicated with like reference numerals and in which:
FIG. 1 depicts a computing environment for configuring a wheelchair, according to embodiments described herein;
FIG. 2 depicts a perspective view of a wheelchair, according to embodiments described herein;
FIG. 3 depicts a user interface for facilitating rental of a wheelchair, according to embodiments described herein;
FIG. 4 depicts a user interface for providing a visit rental of a wheelchair, according to embodiments described herein;
FIG. 5 depicts a user interface for providing a trip rental of a wheelchair, according to embodiments described herein;
FIG. 6 depicts a flowchart for electronically scheduling wheelchair components, according to embodiments described herein;
FIG. 7 depicts a flowchart for electronically renting wheelchair components, according to embodiments described herein; and
FIG. 8 depicts details of a wheelchair for electronically scheduling wheelchair components, according to embodiments described herein.

### DETAILED DESCRIPTION

Embodiments disclosed herein include systems and methods for electronically scheduling wheelchair components. Some embodiments of this disclosure provide a rental system and methods for travel coordination for power wheelchair users. This allows users to leave the power base component (or other wheelchair component) at one originating location and use a rental power base component at the destination location. These embodiments can utilize an application and/or a service for power base components. Since the chair component is often customized for a specific user, the chair component would travel with the user. The power base units are typically more generic, and can be designed for use with various chair components. The user can coordinate a rental of an appropriate power base at a final destination location, and not have to travel with the power base. Rental of other wheelchair components is also contemplated herein.

Embodiments may also provide various options of power bases (or other wheelchair components) to select, and various rental periods, as well as pick up and drop off locations. These preferences and selections could be coordinated using the application. The power base component requested via the application can then be delivered or otherwise be made available at a specific location and time, such as at a gate of an arrival airport terminal, a subway stop, bus stop, etc. The application could also inform the user when an appropriate power base component may not be available, and other arrangements need to be made. In various aspects, the application can provide various configurations and required settings for the rental power base.

In one example, a wheelchair passenger is travelling from Detroit to Los Angeles on an airplane. The wheelchair passenger may arrive at the departure airport as normal. At the departure gate, a personal wheelchair component can be separated from another portion of the wheelchair (such as a power base component). The power base component can be stored at an appropriate location at the departure airport. Upon arrival at the destination airport, a rental wheelchair component (such as a rental power base component) may be waiting at the appropriate terminal/gate, ready for use with the passenger's personal chair component. When return travelling, the rental wheelchair component is removed at the departure gate, and the wheelchair passenger's personal power base component will be waiting at the arrival gate.

In some embodiments, a separate "airport" or temporary power base component can be used to transport the user's chair component from the user's vehicle to the departure airport terminal/gate, and the user's power base can be stored in the user's vehicle. Similarly, another "airport" power base component can be used to transfer the user's chair component from the arrival airport terminal/gate to a destination vehicle or public transportation drop off point, where the requested power base is ready and waiting. The systems and methods for electronically scheduling wheelchair components incorporating the same will be described in more detail, below.

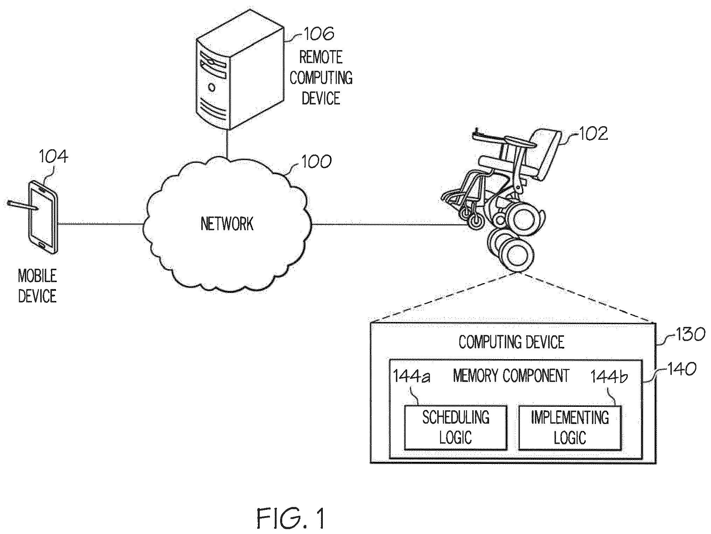

Referring now to the drawings, FIG. 1 depicts a computing environment for configuring a wheelchair, according to embodiments described herein. As illustrated, the computing environment includes a network 100. The network 100 may include a wide area network (WAN), such as the internet, a public switched telephone network, a cellular network, a mobile data network, and/or the like, such as via (WiMax, LTE, 4G, 5G ,etc.). The network 100 may include a local network, such as a wired network (e.g., such as via Ethernet, etc.), a wireless network (such as via Wi-Fi, etc.). The network 100 may similarly facilitate direct device-to-device communication, such as via Bluetooth, Zigbee, etc. Regardless, the network 100 may be configured to couple a wheelchair 102, a mobile device 104, and a remote computing device 106.

The wheelchair 102 may be any powered device for receiving a passenger and accommodating for at least one physical disability. The wheelchair 102 may include a wheelchair computing device, such as computing device 130, which may include a memory component 140. The memory component 140 may store scheduling logic 144a and implementing logic 144b. The connecting logic may facilitate connecting of a chair portion of the wheelchair 102 with a powered base portion, as described in more detail below. The implementing logic 144b may be configured to implement a passenger-specific setting of the wheelchair 102. As discussed in more detail below, implementing the passenger-specific setting may include altering any physical property of the wheelchair 102. As an example, the passenger-specific settings may be associated with balancing, speed limitations, height, weight distribution, age, skill level, and/or prescriptions of the passenger.

The mobile device 104 may be configured as a mobile phone, tablet, laptop, personal computer, and/or other device for providing the functionality described herein. The mobile device 104 may be configured for storing passenger-specific settings of the wheelchair 102 and communicating the passenger-specific settings to the computing device 130. Additionally, the mobile device 104 may be configured for receiving the passenger-specific settings from a user and/or healthcare provider directly via the mobile device 104 and/or via the remote computing device 106. As such, some embodiments may be configured such that the mobile device 104 may be carried by the passenger.

The remote computing device 106 may be configured to communicate with the mobile device 104 and/or the computing device 130. The remote computing device 106 may be configured as a personal computer, server, laptop, mobile computing device, and/or other device for communicating and/or storing data associated with the passenger-specific settings.

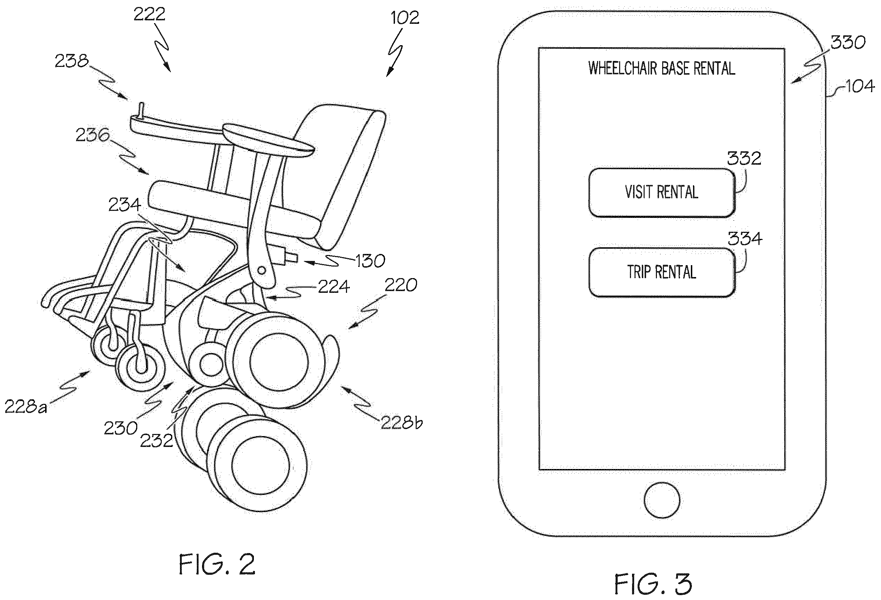

FIG. 2 depicts a perspective view of a wheelchair 102, according to embodiments described herein. As illustrated, the wheelchair 102 includes a power base component 220 and a chair component 222. The power base component 220 may include a chair-receiving interface 224, a plurality unpowered wheels 228a, a plurality of powered wheels 228b, a battery 230, a motor 232, and the computing device 130. The chair-receiving interface 224 may be configured as a male, female, or other type of physical connector for receiving a base-receiving interface 234 of the chair component 222. The base-receiving interface 234 may be oppositely configured from the chair-receiving interface 224 such that a physical connection between the chair-receiving interface 224 and the base-receiving interface 234 may removably secure the power base component 220 to the chair component 222. Additionally, the chair-receiving interface 224 may also facilitate communication and/or an electrical connection between the power base component 220 and the chair component 222 to facilitate powering of the chair component 222 and/or communicating data between the power base component 220 and the chair component 222.

Additionally, the chair component 222 may include the base-receiving interface 234, as well as a seat portion 236, and a controller portion 238. In some embodiments, the chair component 222 may also be powered. The seat portion 236 may include one or more sensors, including weight sensors, proximity sensors, heat sensors, gyroscopes, etc. for determining the position of a passenger. The controller portion 238 may include a joystick, a mouth control, and/or other mechanism for controlling the wheelchair 102.

It should be understood that while the chair component 222 (including the seat portion 236) may be configured as a traditional chair, this is merely one example. In some embodiments, the chair component 222 and/or the seat portion 236 may be configured as an exoskeleton, standing component, brain interface device, and/or other configuration for enhancing the physical capabilities of the passenger.

Movement of a wheelchair 102 may be facilitated via the controller portion 238 and implemented by sophisticated sensors and gyroscopes to maintain the unit's balance while climbing up and down stairs, curbs, and varied terrain. Among other things, the wheelchair 102 can raise a seated user to eye-level standing height, and balance and travel on two wheels.

FIG. 3 depicts a user interface 330 for facilitating rental of a wheelchair 102, according to embodiments described herein. As illustrated, the user interface 330 provides a visit rental option 332 and a trip rental option 334. Specifically, the wheelchair passenger may embark on an event, such as a visit or a trip. In response to a user selection of the visit rental option 332, additional options may be provided associated with a wheelchair passenger needing a power base portion 220 at a particular location. The visit could include one-time visit, such as to a shopping mall, athletic event, etc. or may be a regular visit, such as home or office. Similarly, the trip could be a one-way trip or a round trip.

As described in more detail below, a visit may include any event where the passenger utilizes a rental wheelchair component at a single location or uses a single wheelchair component at a destination. A trip may include any event where the user utilizes one or more wheelchair components to arrive at a destination or return from the destination. A trip may also include the passenger utilizing the rental wheelchair component at the destination.

In response to selection of the trip rental option 334, additional options may be provided associated with a trip that the wheelchair passenger will take. Examples might include an airplane trip, a bus trip, a boat trip, etc. In these examples, the wheelchair passenger might need a plurality of rental wheelchair portions (such as a rental powered base component) for each leg of the trip, such that the passenger may travel to a destination and back to a starting location.

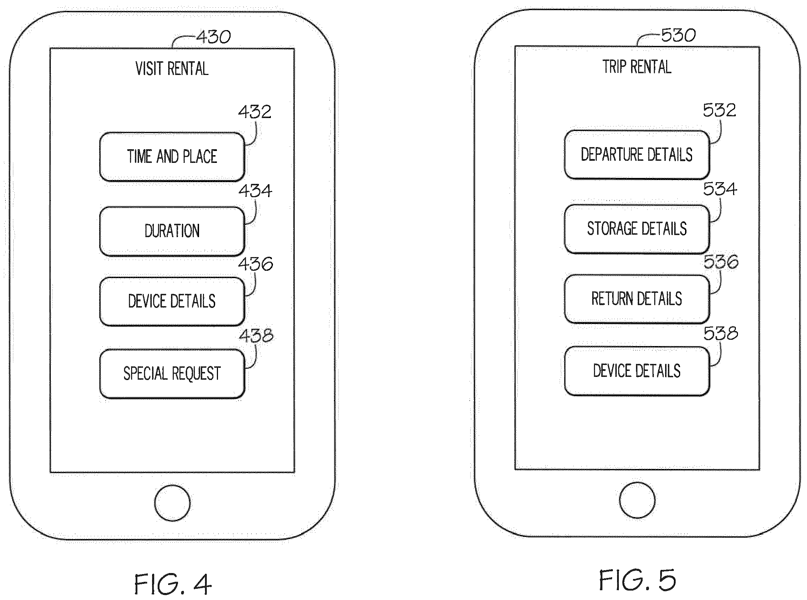

FIG. 4 depicts a user interface 430 for facilitating a visit rental of a wheelchair 102, according to embodiments described herein. As illustrated, the user interface 430 may include a time and place option 432, a duration option 434, a device details option 436, and a special request option 438.

In response to a user selection of the time and place option 432, the additional options for a user to enter the time and place of the visit may be provided. As an example, the user may enter that the wheelchair passenger will be at the Mall of America at 2:00 PM on January 1, 2019. In response to selection of the duration option 434, additional options associated with the duration that the wheelchair passenger will be located at the Mall of America (or will otherwise require the power base component 220 or other rental wheelchair component). The user may additionally enter whether this is a regular visit and/or if this is a one-time visit.

In response to selection of the device details option 436, the user may be provided with additional options associated with the rental wheelchair component that the user wishes to rent. In some embodiments, this might involve providing a listing of available power base component models, search capabilities, ratings, etc. for the user to select the desired rental power base component 220. Similarly, some embodiments may be configured to provide an option for the user to rent other wheelchair components. This might include a scenario where the user desires to rent a chair component 222 only, a chair component 222 and a power base component 220, and/or accessories to the chair component 222 and/or power base component 220. Similarly, some embodiments may provide options associated with the user's desired needs and the system can automatically determine the proper rental wheelchair component. As an example, the user may select options such as the type of controller, the likely distance of travel, the likely time of use, the terrain, the wheelchair passenger restrictions, and/or other data.

In response to a user selection of the special request option 438, additional options may be provided for a user to input any special requests that the wheelchair passenger may require. As an example, the user may specify a location and manner of where to pick up and drop off the rental wheelchair component, identifying information about the passenger, and/or other special information that would assist the passenger in completing the transaction. As such, the mobile device 104, the remote computing device 106, and/or the computing device 130 may receive an identification of a location of the event, a time at the location, a duration the passenger will utilize the rental wheelchair component, requested device details for the rental wheelchair component, and/or a special request for the passenger.

FIG. 5 depicts a user interface 530 for facilitating a trip rental of a wheelchair 102, according to embodiments described herein. As discussed above, the trip rental embodiments may differ from the event rental embodiments in that the trip rental embodiments typically coordinate the utilization of rental wheelchair components at a plurality of locations. As such, the user interface 530 includes a departure details option 532, a storage details option 534, a device details option 536, and a return details option 538.

In response to selection of the departure details option 532, additional options related to the trip departure may be provided. As an example, the user may submit a date, time, flight, location, trip confirmation number, and/or other data to identify when and where the wheelchair passenger's trip will begin. It will be understood that in some embodiments, the user may input data related to an airport, bus terminal, train station, etc., while in other embodiments, the user may enter the wheelchair passenger's home address. As an example, some wheelchair passengers may wish to have the wheelchair component at home and thus begin the trip (and thus utilization of the rental wheelchair component) at home.

Regardless, the information provided via the departure details option 532 may be utilized to coordinate receipt of a selected wheelchair component. As an example, the user may enter Atlanta-Hartsfield Airport as the departure location. In such an example, embodiments may have the selected rental wheelchair component available to the wheelchair passenger at the selected time and at a predetermined location at Atlanta-Hartsfield Airport (e.g. at the vehicle the wheelchair passenger took to the airport). The wheelchair passenger may then utilize the received wheelchair component to travel to the appropriate gate.

It will be understood that embodiments may include scheduling of wheelchair components at various sections of a trip. As an example, if the wheelchair passenger has a layover at an intermediate location, the user may enter this information as well, until the wheelchair passenger reaches his/her final destination.

In response to selection of the storage details option 534, the user may provide information regarding storage of the wheelchair passenger's personal wheelchair component and/or storage information regarding the rented wheelchair component. Referring to the previous example, the user may specify that the wheelchair passenger will utilize his/her personal wheelchair component while at Atlanta-Hartsfield Airport, but will need a rented wheelchair component at the destination. As such, the wheelchair passenger will need to store his/her personal wheelchair component during the trip and the user may indicate as much. In some embodiments, the user may indicate that the rented wheelchair component is to be received at the airport, but stored at the airport until the wheelchair passenger returns. If the user plans to take the rented wheelchair component on the airplane, the user may indicate this as well.

In response to selection of the return details option 538, additional options regarding the return trip may be provided. As an example, the user may enter information regarding each section of the return trip, similar to that associated with the departure details option 532.

In response to selection of the device details option 536, the user may provide the device details for the rented wheelchair component, as described above. In some embodiments, the user may enter a plurality of different devices/components for each section of the trip. As an example, some embodiments may be configured to have a different rental wheelchair component (or type of wheelchair component) available at each section of the trip, instead of the wheelchair passenger traveling with the rented wheelchair component. Thus, the user may enter first device details for the wheelchair component utilized at Atlanta-Hartsfield Airport and second device details for the wheelchair component utilized at the destination airport. Device details for the return trip may also be provided. As such, the mobile device 104, the remote computing device 106, and/or the computing device 130 may receive departure details of the trip, storage details for another personal wheelchair component, return details of the trip, and/or requested device details for the rental wheelchair component.

It should be understood that the device details may include information regarding the user's personal wheelchair components. With this information, embodiments may determine compatible rental components that are available to the wheelchair passenger.

It should also be understood that embodiments described herein may be configured to facilitate communication of event related data and other data from the rental wheelchair component to the wheelchair passenger. This communication may be made via the mobile device 104 and/or via the personal wheelchair component. As an example, once the personal wheelchair component is paired with the rental wheelchair component, the rental wheelchair component may provide data for the passenger to return the rental wheelchair component, data for navigating a location associated with the event, and/or other data.

As an example, if the passenger pairs the rental wheelchair component with the personal wheelchair component during a trip at an airport, the rental wheelchair component may determine the location of the passenger's next flight and provide flight status, gate, and routing instructions to that gate. This information may be received from the remote computing device 106 and/or stored locally on the computing device 130.

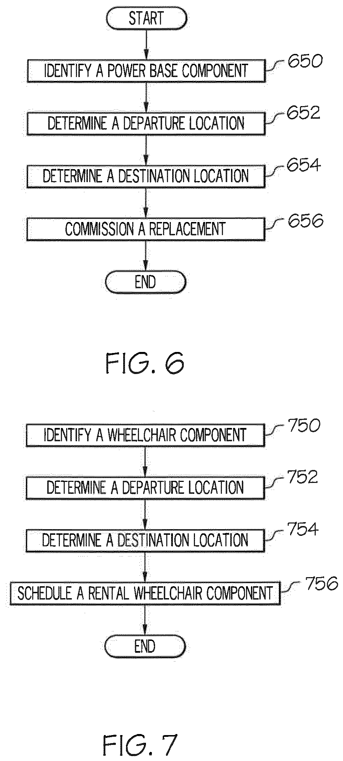

FIG. 6 depicts a flowchart for electronically scheduling wheelchair components, according to embodiments described herein. As illustrated in block 650, a personal power base component 220 may be identified. In block 652, a departure location for a wheelchair passenger may be determined. In block 654, a destination location may be determined. In block 656, a rental power base component 220 may be commissioned such that the rental power base component 220 may be located at the destination location for coupling with the chair component 222, and where the rental power base component 220 is configured to communicate at least one setting to the chair component 222.

FIG. 7 depicts a flowchart for electronically renting wheelchair components, according to embodiments described herein. As illustrated in block 750, a wheelchair component may be identified. Specifically, embodiments may be configured to determine details of a wheelchair passenger's wheelchair to determine compatible rental wheelchair components. Some embodiments may also consider the event when determining compatible rental wheelchair components. As an example, terrain, time, distance, etc. may affect the recommended rental wheelchair component. In block 752, a departure location and other departure details of a trip may be determined. In block 754 a destination location and other destination details of the trip may be determined. In block 756, rental of a rental wheelchair component may be scheduled for compatibly pairing with the wheelchair component on at least one section of the trip.

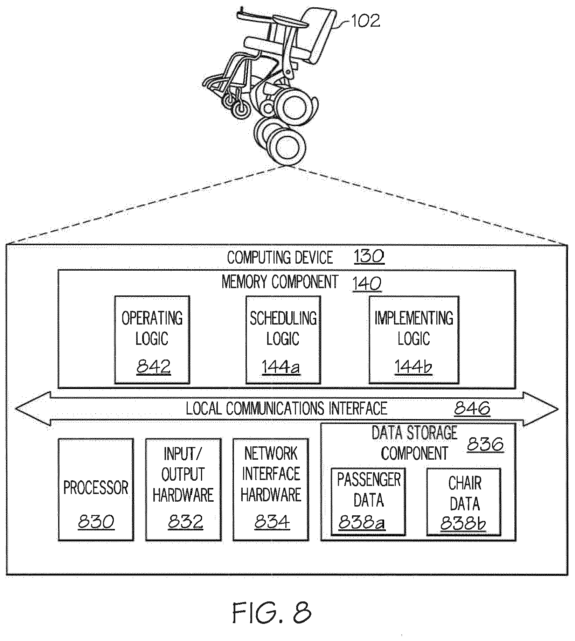

FIG. 8 depicts details of a wheelchair for electronically scheduling wheelchair components, according to embodiments described herein. The computing device 130 includes a processor 830, input/output hardware 832, the network interface hardware 834, a data storage component 836 (which stores passenger data 838a, chair data 838b, and/or other data), and the memory component 140. The memory component 140 may be configured as volatile and/or nonvolatile memory and as such, may include random access memory (including SRAM, DRAM, and/or other types of RAM), flash memory, secure digital (SD) memory, registers, compact discs (CD), digital versatile discs (DVD), and/or other types of non-transitory computer-readable mediums. Depending on the particular embodiment, these non-transitory computer-readable mediums may reside within the computing device 130 and/or external to the computing device 130.

The memory component 140 may store operating logic 842, the scheduling logic 144a and the implementing logic 144b. The scheduling logic 144a and the implementing logic 144b may each include a plurality of different pieces of logic, each of which may be embodied as a computer program, firmware, and/or hardware, as an example. A local communications interface 846 is also included in FIG. 8 and may be implemented as a bus or other communication interface to facilitate communication among the components of the computing device 130.

The processor 830 may include any processing component operable to receive and execute instructions (such as from a data storage component 836 and/or the memory component 140). As described above, the input/output hardware 832 may include and/or be configured to interface with the components of the wheelchair 102.

The network interface hardware 834 may include and/or be configured for communicating with any wired or wireless networking hardware, including an antenna, a modem, LAN port, wireless fidelity (Wi-Fi) card, WiMax card, Bluetooth chip, USB card, mobile communications hardware, and/or other hardware for communicating with other networks and/or devices. From this connection, communication may be facilitated between the computing device 130 and other computing devices, such as via the internet, to provide the functionality described herein.

The operating logic 842 may include an operating system and/or other software for managing components of the computing device 130. As also discussed above, the content scheduling logic 144a may reside in the memory component 140 and may be configured to cause the processor 830 provide facilitate communication between the chair component 222 and the power base component 220. In some embodiments, the scheduling logic 144a may facilitate communication between the wheelchair 102 and eternal components, such as the mobile device 104 and/or the remote computing device 106. Similarly, the implementing logic 144b may be utilized to customize the chair component 222, as described above.

It should be understood that while the components in FIG. 8 are illustrated as residing within the computing device 130, this is merely an example. In some embodiments, one or more of the components may reside external to the computing device 130. It should also be understood that, while the computing device 130 is illustrated as a single device, this is also merely an example. In some embodiments, the scheduling logic 144a and the implementing logic 144b may reside on different computing devices. As an example, one or more of the functionality and/or components described herein may be provided by another computing device, such as the mobile device 104, the remote computing device 106, etc.

Additionally, while the computing device 130 is illustrated with the scheduling logic 144a and the implementing logic 144b as separate logical components, this is also an example. In some embodiments, a single piece of logic may cause the computing device 130 to provide the described functionality. Additionally, the remote computing device 106 and/or the mobile device 104 may include similar hardware and software.

As illustrated above, various embodiments for scheduling wheelchair components are disclosed. These embodiments provide a mechanism for a wheelchair passenger to more easily travel without the strain of traveling with the entire wheelchair. Additionally, embodiments may provide information previously unavailable to the wheelchair passenger when paired with a rental wheelchair component.

While particular embodiments and aspects of the present disclosure have been illustrated and described herein, various other changes and modifications can be made without departing from the spirit and scope of the disclosure. Moreover, although various aspects have been described herein, such aspects need not be utilized in combination. Accordingly, it is therefore intended that the appended claims cover all such changes and modifications that are within the scope of the embodiments shown and described herein.

It should now be understood that embodiments disclosed herein include systems, methods, and non-transitory computer-readable mediums for electronically scheduling wheelchair components. It should also be understood that these embodiments are merely exemplary and are not intended to limit the scope of this disclosure.

## Claims

1. A method for electronically scheduling wheelchair components comprising:
identifying, by a computing device, a personal wheelchair component;
determining, by the computing device, a location for an event of a passenger of the personal wheelchair component;
scheduling, by the computing device, a rental wheelchair component for compatibly pairing with the personal wheelchair component for at least one section of the event,
wherein, when the rental wheelchair component paired with the personal wheelchair component, a wheelchair setting is communicated for implementation.

2. The method of claim 1, wherein the personal wheelchair component includes at least one of the following: a chair component or a power base component.

3. The method of claim 1, wherein the rental wheelchair component includes at least one of the following: a chair component or a power base component.

4. The method of claim 1, wherein the event includes at least one of the following: a round trip or a one-way trip.

5. The method of claim 1, wherein the event includes at least one of the following: a one-time visit or a regular visit.

6. The method of claim 1, wherein the event includes a trip and wherein scheduling the rental wheelchair component includes at least one of the following: receiving departure details of the trip, receiving storage details for another personal wheelchair component, receiving return details of the trip, or receiving requested device details for the rental wheelchair component.

7. The method of claim 1, wherein the event includes a visit and wherein scheduling the rental wheelchair component includes at least one of the following: receiving an identification of the location of the event, receiving a time at the location, receiving a duration the passenger will utilize the rental wheelchair component, receiving requested device details for the rental wheelchair component, or receiving a special request for the passenger.

8. A system for electronically scheduling wheelchair components comprising:
a rental wheelchair component for compatibly pairing with a personal wheelchair component, the rental wheelchair component including a wheelchair computing device; and
a remote computing device that includes logic that, when executed by the remote computing device, causes the system to perform at least the following:
identify the personal wheelchair component;
determine a location of an event for a passenger of the personal wheelchair component;
schedule the rental wheelchair component for compatibly pairing with the personal wheelchair component for at least one section of the event,
wherein, when the rental wheelchair component is coupled to the personal wheelchair component, the wheelchair computing device causes the rental wheelchair component to communicate event related data to the passenger.

9. The system of claim 8, wherein the event related data is communicated to the passenger via at least one of the following: the personal wheelchair component or a mobile device operated by the passenger.

10. The system of claim 8, wherein the event related data includes at least one of the following: data for the passenger to acquire the rental wheelchair component, data for the passenger to return the rental wheelchair component, or data for navigating the location associated with the event.

11. The system of claim 8, wherein the personal wheelchair component includes at least one of the following: a chair component or a power base component.

12. The system of claim 8, wherein the rental wheelchair component includes at least one of the following: a chair component or a power base component.

13. The system of claim 8, wherein the event includes at least one of the following: a round trip or a one-way trip.

14. The system of claim 8, wherein the event includes at least one of the following: a one-time visit or a regular visit.

15. The system of claim 8, wherein the event includes a trip and wherein scheduling the rental wheelchair component includes at least one of the following: receiving departure details of the trip, receiving storage details for another personal wheelchair component, receiving return details of the trip, or receiving requested device details for the rental wheelchair component.

16. The system of claim 8, wherein the event includes a visit and wherein scheduling the rental wheelchair component includes at least one of the following: receiving an identification of the location of the event, receiving a time at the location, receiving a duration the passenger will utilize the rental wheelchair component, receiving requested device details for the rental wheelchair component, or receiving a special request for the passenger.

17. A system for electronically scheduling wheelchair components comprising:
a remote computing device that includes logic that, when executed by the remote computing device, causes the system to perform at least the following:
identify a personal wheelchair component;
determine a location for an event for a passenger of the personal wheelchair component; and
schedule a rental wheelchair component for compatibly pairing with the personal wheelchair component for at least one section of the event,
wherein, when the rental wheelchair component is coupled to the personal wheelchair component, a wheelchair computing device causes the rental wheelchair component to communicate event related data to the passenger, and
wherein, when the rental wheelchair component paired with the personal wheelchair component, a wheelchair setting is communicated for implementation.

18. The system of claim 17, wherein the event related data is communicated to the passenger via at least one of the following: the personal wheelchair component or a mobile device operated by the passenger.

19. The system of claim 17, wherein the event related data includes at least one of the following: data for the passenger to acquire the rental wheelchair component, data for the passenger to return the rental wheelchair component, or data for navigating the location associated with the event.

20. The system of claim 17, wherein the event includes at least one of the following: a round trip or a one-way trip.
